(19) Europäisches Patentamt
European Patent Office
Office européen des brevets

(11) EP 4 746 099 A1

(12) EUROPEAN PATENT APPLICATION
published in accordance with Art. 153(4) EPC

(43) Date of publication:
20.05.2026 Bulletin 2026/21

(21) Application number: 23946536.2

(22) Date of filing: 29.12.2023

(51) International Patent Classification (IPC):
$H01M\ 10/054^{(2010.01)}$   $H01M\ 10/058^{(2010.01)}$
$H01M\ 10/42^{(2006.01)}$   $H01M\ 4/13^{(2010.01)}$
$H01M\ 4/133^{(2010.01)}$

(52) Cooperative Patent Classification (CPC):
Y02E 60/10

(86) International application number:
PCT/CN2023/143642

(87) International publication number:
WO 2025/020461 (30.01.2025 Gazette 2025/05)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.07.2023 CN 202310919702

(71) Applicant: Jiangsu Zoolnasm Energy Technology
Co., Ltd.
Suzhou, Jiangsu 215000 (CN)

(72) Inventors:
• CHEN, Lei
  Suzhou, Jiangsu 215000 (CN)
• TANG, Congcong
  Suzhou, Jiangsu 215000 (CN)
• DIAO, Jibo
  Suzhou, Jiangsu 215000 (CN)
• MA, Tian
  Suzhou, Jiangsu 215000 (CN)
• WANG, Xueyang
  Suzhou, Jiangsu 215000 (CN)

(74) Representative: Nederlandsch Octrooibureau
P.O. Box 29720
2502 LS The Hague (NL)

(54) **SODIUM-ION BATTERY, BATTERY MODULE, BATTERY PACK, AND ELECTRIC DEVICE**

(57)    A sodium-ion battery, a battery module, a battery pack, and an electric device. The sodium-ion battery comprises a positive electrode sheet and a negative electrode sheet, wherein the positive electrode sheet comprises a positive electrode current collector and a positive electrode film layer, the positive electrode film layer comprising a positive electrode active material and a sodium-supplementing agent; and the negative electrode sheet comprises a negative electrode current collector and a negative electrode film layer, the negative electrode film layer comprising a negative electrode active material. The sodium-ion battery satisfies: $C_{p2} \geq C_{N1}$ and $C_{p1} \leq C_{N2}$, wherein $C_{p1}$ represents the sodium removal capacity of the positive electrode active material per unit area of the positive electrode film layer, and $C_{p2}$ represents the sodium removal capacity of the sodium-supplementing agent per unit area of the positive electrode film layer, $C_{N1}$ represents the sodium intercalation capacity of the negative electrode active material per unit area of the negative electrode film layer when the negative electrode voltage is greater than a preset voltage $V_1$, and $C_{N2}$ represents the sodium intercalation capacity of the negative electrode active material per unit area of the negative electrode film layer when the negative electrode voltage is less than the preset voltage $V_1$.

Figure 2

EP 4 746 099 A1

## Description

## CROSS-REFERENCE TO RELATED APPLICATIONS

The present application claims the priority of the Chinese patent application numbered 202310919702.9, submitted on July 25, 2023, entitled "Sodium-Ion Battery, Battery Module, Battery Pack, and Electric Device", the entire content of which is incorporated herein by reference.

## Technical Field

The present application relates to the technical field of energy storage, and specifically relates to a sodium-ion battery, a battery module, a battery pack, and an electric device.

## Background Art

With the increasingly prominent energy and environmental issues, the new energy industry has gained increasing attention. Lithium-ion batteries, due to their characteristics such as high energy density and good cycling performance, have been widely used as an important new type of energy storage device in recent years. However, due to the scarcity of resources for active materials related to lithium-ion batteries, the battery cost always remains high, and at the same time, they face severe problems such as the exhaustion of related resources. Therefore, it is necessary to develop other low-cost battery systems.

Sodium-ion batteries have become a popular research direction in recent years due to their advantages such as low cost, abundant resources, and similar manufacturing processes to lithium-ion batteries. However, in the prior art, sodium-ion batteries tend to generate gas during the discharge process, especially when discharged to a relatively low voltage stage, which seriously affects the safety of sodium-ion batteries.

## Summary

In view of this, embodiments of the present application provide a sodium-ion battery, a battery module, a battery pack, and an electric device, which can reduce the amount of gas generated and improve the safety of the sodium-ion battery.

In a first aspect, embodiments of the present application provide a sodium-ion battery, and the sodium-ion battery comprises a cathode sheet and an anode sheet; the cathode sheet comprises a cathode current collector and a cathode film layer disposed on at least one side of the cathode current collector, and the cathode film layer comprises a cathode active material and a sodium-supplementing agent; the anode sheet comprises an anode current collector and an anode film layer disposed on at least one side of the anode current collector, and the anode film layer comprises an anode active material; the sodium-ion battery satisfies: $C_{P2} \geq C_{N1}$ and $C_{P1} \leq C_{N2}$, wherein, $C_{P1}$ represents the sodium extraction capacity of the cathode active material per unit area of the cathode film layer, with a unit of $mAh/cm^2$; $C_{P2}$ represents the sodium extraction capacity of the sodium-supplementing agent per unit area of the cathode film layer, with a unit of $mAh/cm^2$; $C_{N1}$ represents the sodium intercalation capacity of the anode active material per unit area of the anode film layer when the anode voltage is equal to or above a preset voltage $V_1$, with a unit of $mAh/cm^2$; and $C_{N2}$ represents the sodium intercalation capacity of the anode active material per unit area of the anode film layer when the anode voltage is equal to or below a preset voltage $V_1$, with a unit of $mAh/cm^2$.

According to the embodiments of the first aspect of the present application, the sodium-ion battery satisfies: $C_{P2}/C_{N1}$ is 1-1.9, and $C_{P1}/C_{N2}$ is 0.8-1.

According to the embodiments of the first aspect of the present application, a relationship among $C_{P1}$, $C_{P2}$, $C_{N1}$, and $C_{N2}$ satisfies: $(C_{P1} + C_{P2}) \leq (C_{N1} + C_{N2})$.

According to the embodiments of the first aspect of the present application, a value range of the preset voltage $V_1$ is 0.1V-0.7V.

According to the embodiments of the first aspect of the present application, the sodium-ion battery satisfies at least one of the following characteristics: the cathode active material comprises at least one of sodium transition metal oxides, polyanionic compounds, and Prussian blue analogs; the sodium-supplementing agent comprises at least one of sodium carbonate, sodium oxalate, sodium nitrite, and sodium azide; and the anode active material comprises hard carbon.

According to the embodiments of the first aspect of the present application, a sodium-ion battery satisfies at least one of the following characteristics: based on the total mass of the cathode film layer, a mass percentage of the cathode active material is 85-93%; based on the total mass of the cathode film layer, a mass percentage of the sodium-supplementing agent is 4-8%; and based on the total mass of the anode film layer, a mass percentage of the anode active material is 90-96%.

According to the embodiments of the first aspect of the present application, the cathode film layer further comprises a cathode conductive agent and/or a cathode binder.

According to the embodiments of the first aspect of the present application, the anode film layer further comprises an anode conductive agent and/or an anode binder.

According to the embodiments of the first aspect of the present application, the sodium-ion battery satisfies at least one of the following characteristics: the cathode conductive agent comprises one or more of graphite, superconducting carbon, acetylene black, carbon black, carbon nanotubes, graphene, carbon nanofiber, metal powder, metal fiber, and polyphenylene derivatives; the anode conductive agent comprises one or more of graphite, superconducting carbon, acetylene black, carbon black, carbon nanotubes, graphene, carbon nanofiber, metal powder, metal fiber, and polyphenylene derivatives; the cathode binder comprises one or more of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylate resins; and the anode binder comprises one or more of styrene-butadiene rubber, polyacrylic acid, sodium polyacrylate, polyacrylamide, polyvinyl alcohol, sodium alginate, polymethacrylic acid, sodium carboxymethyl cellulose, and carboxymethyl chitosan.

According to the embodiments of the first aspect of the present application, the sodium-ion battery satisfies at least one of the following characteristics: an areal density of a single-sided cathode film layer is 10g/cm$^2$-30g/cm$^2$; and an areal density of a single-sided anode film layer is 3g/cm$^2$-10g/cm$^2$.

In a second aspect, embodiments of the present application provide a battery module, comprising a sodium-ion battery of the present application.

In a third aspect, embodiments of the present application provide a battery pack, comprising a sodium-ion battery and/or a battery module of the present application.

In a fourth aspect, embodiments of the present application provide an electric device, comprising one or more of a sodium-ion battery, a battery module, and a battery pack of the present application.

The present application has at least the following beneficial effects:

The sodium-ion battery of the present application, by controlling $C_{P2} \geq C_{N1}$ and $C_{P1} \leq C_{N2}$, (that is, a sodium extraction capacity of a sodium-supplementing agent per unit area of the cathode film layer is greater than or equal to a sodium intercalation capacity when an anode voltage is equal to or above a preset voltage $V_1$, and a sodium extraction capacity of a cathode active material in the cathode film layer is less than or equal to a sodium ion capacity when an anode voltage of the anode sheet is equal to or below a preset voltage $V_1$), allows sodium ions in the cathode active material and the sodium-supplementing agent can be deintercalated and transferred through electrolyte to anode during the first charge. During discharge, sodium ions corresponding to a sodium intercalation capacity at an anode voltage equal to or below a preset voltage $V_1$ are first released from the anode film layer. Since the sodium extraction capacity of the cathode active material in the cathode film layer is less than the sodium intercalation capacity in the range equal to or below a preset voltage $V_1$ on the anode discharge curve, after sodium ions have intercalated into the cathode active material, the sodium ions in the anode film layer corresponding to a range where the anode voltage is equal to or below the preset voltage $V_1$ are not completely deintercalated. Therefore, it is conducive to maintaining the potential of the anode equal to below the preset voltage $V_1$. At this time, the state of the anode is relatively stable, and it is less prone to reacting with the electrolyte, thereby significantly suppressing gas generation, with minimal gas generated in subsequent discharge, thus improving the safety of the sodium-ion battery.

**Brief Description of the Drawings**

To more clearly illustrate the technical solutions of the examples of the present application, the drawings required in the examples of the present application will be briefly introduced below. Obviously, the drawings described below are merely some embodiments of the present application. For those of ordinary skill in the art, under the premise of not making creative efforts, it is also possible to obtain other drawings based on the drawings.

Figure 1 shows a charge-discharge specific capacity curve of the anode film layer in the example.
Figure 2 shows discharge curves of the sodium-ion batteries in Example 1 and Comparative Example 1.

**Detailed Description**

The following are the preferred embodiments of the examples of the present invention. It should be pointed out that for those of ordinary skill in the art, several improvements and modifications may be made without departing from the principles of the examples of the present invention, and such improvements and modifications shall also be deemed as the protection scope of the examples of the present invention.

For the sake of simplicity, only some numerical ranges are explicitly disclosed herein. However, any lower limit may be combined with any upper limit to form a range not explicitly recited; and any lower limit may be combined with other lower limits to form a range not explicitly recited, similarly any upper limit may be combined with any other upper limit to form a range not explicitly recited. In addition, although not explicitly recited, every point or individual numerical value between the endpoints of a range is included in the range. Therefore, every point or individual numerical value may serve as its own lower limit or upper limit to combine with any other point or individual numerical value, or with other lower limit or upper limit, to form range not explicitly recited. In the description herein, it should be noted that unless otherwise specified, "above" and "below" include the number itself, and the meaning of "more" in "one or more" is two or more.

In the description herein, unless otherwise specified, the term "or" is inclusive. For example, the phrase "A or B" means "A, B, or both A and B". More specifically, the condition "A or B" is satisfied if any of the following conditions are met: A is true (or exists) and B is false (or does not exist); A is false (or does not exist) and B is true (or exists); or both A and B are true (or exist).

It should be understood that relational terms such as terms "first", "second" and the like are only used to distinguish one entity or operation from another entity or operation, without necessarily requiring or implying any actual relationship or order between these entities or operations.

The above summary of the invention of the present application is not intended to describe each disclosed embodiment or every implementation manner of the present application. The following description more specifically exemplifies exemplary embodiments. Throughout the application, guidance is provided through a series of examples, which may be used in various combinations. In each example, the listing is provided only as a representative group and shall not be construed as exhaustive.

Sodium-ion batteries have become a popular research direction in recent years due to their advantages such as low cost, abundant resources, and similar manufacturing processes to lithium-ion batteries. However, in the prior art, sodium-ion batteries tend to generate gas during the discharge process, especially when discharged to a relatively low voltage, which seriously affects the safety of sodium-ion batteries.

In view of this, the inventors of the present application have proposed a sodium-ion battery through extensive research, which can reduce the amount of gas generated and improve the safety of sodium-ion batteries.

In a first aspect, embodiments of the present application provide a sodium-ion battery, and the sodium-ion battery comprises a cathode and an anode; the cathode comprises a cathode current collector and a cathode film layer disposed on at least one side of the cathode current collector, and the cathode film layer comprises a cathode active material and a sodium-supplementing agent; and the anode comprises an anode current collector and an anode film layer disposed on at least one side of the anode current collector, and the anode film layer comprises an anode active material.

The sodium-ion battery satisfies: $C_{P2} \geq C_{N1}$ and $C_{P1} \leq C_{N2}$, wherein, $C_{P1}$ represents the sodium extraction capacity of the cathode active material per unit area of the cathode film layer, with a unit of $mAh/cm^2$; $C_{P2}$ represents the sodium extraction capacity of the sodium-supplementing agent per unit area of the cathode film layer, with a unit of $mAh/cm^2$; $C_{N1}$ represents the sodium intercalation capacity of the anode active material per unit area of the anode film layer when the anode voltage is equal to or above a preset voltage $V_1$, with a unit of $mAh/cm^2$; and $C_{N2}$ represents the sodium intercalation capacity of the anode active material per unit area of the anode film layer when the anode voltage is equal to or below a preset voltage $V_1$, with a unit of $mAh/cm^2$.

The above $C_{P1}$ represents the sodium extraction capacity of the cathode active material per unit area of the cathode film layer, the above $C_{P2}$ represents the sodium extraction capacity of the sodium-supplementing agent per unit area of the cathode film layer, and $C_{P1} + C_{P2}$ represents the total sodium extraction capacity per unit area of the cathode film layer.

$C_{P1}$ can be calculated according to the following formula: $C_{P1}$ = mass of the cathode active material per unit area of the cathode film layer × sodium extraction specific capacity of the cathode active material; wherein the mass of the cathode active material per unit area of the cathode film layer = areal density of the cathode film layer × mass percentage of the cathode active material in the cathode film layer.

$C_{P2}$ can be calculated according to the following formula: $C_{P2}$ = mass of the sodium-supplementing agent per unit area of the cathode film layer × sodium extraction specific capacity of the sodium-supplementing agent during the first charge; wherein the mass of the sodium-supplementing agent per unit area of the cathode film layer = areal density of the cathode film layer × mass percentage of the sodium-supplementing agent in the cathode film layer.

The above $C_{N1}$ represents the sodium intercalation capacity of the anode active material per unit area of the anode film layer when the anode voltage is equal to or above the preset voltage $V_1$, with the unit of $mAh/cm^2$; the above $C_{N2}$ represents the sodium intercalation capacity of the anode active material per unit area of the anode film layer when the anode voltage is equal to or below the preset voltage $V_1$, with the unit of $mAh/cm^2$; and $C_{N1} + C_{N2}$ represents the total sodium intercalation capacity per unit area of the anode film layer.

$C_{N1}$ can be calculated according to the following formula: $C_{N1}$ = mass of the anode active material per unit area of the anode film layer × sodium intercalation specific capacity of the anode active material when the voltage is equal to or above the preset voltage $V_1$; wherein the mass of the anode active material per unit area of the anode film layer = areal density of the anode film layer × mass percentage of the anode active material in the anode film layer.

$C_{N2}$ can be calculated according to the following formula: $C_{N2}$ = mass of the anode active material per unit area of the anode film layer $\times$ sodium intercalation specific capacity of the anode active material when the voltage changes from $V_1$ to 0; wherein the mass of the anode active material per unit area of the anode film layer = areal density of the anode film layer $\times$ mass percentage of the anode active material in the anode film layer.

In the present application, a preset voltage $V_1$ refers to a voltage value near a demarcation voltage $V_2$ between the plateau region and the slope region on the anode discharge curve. A preset voltage $V_1$ may be any value within the range of $V_2$-0.05V to $V_2$+0.6V. For example, when a demarcation voltage $V_2$ is 0.1V, a preset voltage $V_1$ is any value within the range of 0.05V to 0.7V. Exemplarily, a preset voltage $V_1$ is 0.05V, 0.1V, 0.2V, 0.3V, 0.4V, 0.5V, 0.6V or 0.7V.

In some examples, a preset voltage $V_1$ has a value of 0.1V to 0.7V. Exemplarily, a preset voltage $V_1$ is 0.1, 0.2V, 0.3V, 0.4V, 0.5V, 0.6V, 0.7V, or any value within the range composed of the above arbitrary numerical values.

In some embodiments, the means for controlling the $C_{P2}/C_{N1}$ and $C_{P1}/C_{N2}$ ratios may include, but are not limited to, selecting appropriate anode active materials and cathode active materials, as well as controlling the areal density of the anode film layer, the mass percentage of the anode active material, the areal density of the cathode film layer, and the mass percentage of the cathode active material within appropriate ranges.

The present application, by controlling $C_{P2} \geq C_{N1}$ and $C_{P1} \leq C_{N2}$, that is, a sodium extraction capacity of a sodium-supplementing agent per unit area of the cathode film layer is greater than or equal to a sodium intercalation capacity when an anode voltage is equal to or above a preset voltage $V_1$, and a sodium extraction capacity of a cathode active material in the cathode film layer is less than or equal to a sodium ion capacity in the interval equal to or below a preset voltage $V_1$ on the anode discharge curve, can greatly reduce gas generation, and improve the safety of the sodium-ion battery.

Without intending to be limited by any theory or explanation, the inventors of the present application have found through experiments that during the first charge of the sodium-ion battery, sodium ions in the cathode active material and the sodium-supplementing agent of the cathode can be deintercalated and transferred through electrolyte to the anode. During discharge, sodium ions corresponding to a sodium intercalation capacity at an anode voltage equal to or below a preset voltage $V_1$ are first released from the anode film layer. Since the sodium extraction capacity of the cathode active material in the cathode film layer is less than the sodium intercalation capacity in the range equal to or below a preset voltage $V_1$ on the anode discharge curve, after sodium ions have intercalated into the cathode active material, the sodium ions in the anode film layer corresponding to a range where the anode voltage is equal to or below the preset voltage $V_1$ are not completely deintercalated. Therefore, it is conducive to maintaining the potential of the anode equal to or below a preset voltage $V_1$. At this time, the state of the anode is relatively stable, and it is less prone to reacting with the electrolyte, thereby greatly reducing gas generation, with almost no gas being generated during continued discharge, thus improving the safety of the sodium-ion battery. Preferably, the preset voltage $V_1$ is within the range of 0.1V to 0.7V.

In some examples, $C_{P2}/C_{N1}$ is 1-1.9, and $C_{P1}/C_{N2}$ is 0.8-1. Exemplarily, $C_{P2}/C_{N1}$ may be 1, 1.1, 1.2, 1.3, 1.4, 1.5, 1.6, 1.7, 1.8, 1.9, or any value within the range formed by any two of the aforementioned values. Exemplarily, $C_{P1}/C_{N2}$ may be 0.80, 0.82, 0.84, 0.86, 0.88, 0.90, 0.92, 0.94, 0.96, 0.98, 1, or any value within the range formed by any two of the aforementioned values.

By controlling $C_{P2}/C_{N1}$ and $C_{P1}/C_{N2}$ ratios within the above ranges, the present application can enable the sodium-ion battery to have a relatively high energy density while reducing the amount of gas generated.

In some examples, a relationship among $C_{P1}$, $C_{P2}$, $C_{N1}$, and $C_{N2}$ satisfies: $(C_{P1} + C_{P2}) \leq (C_{N1} + C_{N2})$.

By controlling $(C_{P1} + C_{P2}) \leq (C_{N1} + C_{N2})$, the sodium deposition phenomenon can be reduced, thereby improving the safety of the sodium-ion battery.

The materials, composition and manufacturing method of the cathode used in the sodium-ion battery of the present application may include any techniques known in the prior art.

The cathode comprises a cathode current collector and a cathode film layer disposed on at least one surface of the cathode current collector and comprising a cathode active material and a sodium-supplementing agent. As an example, the cathode current collector comprises two surfaces opposite to each other in the direction of its own thickness, and the cathode film layer is disposed on either or both of the opposite two surfaces of the cathode current collector.

In some embodiments, the cathode current collector comprises a metal foil, such as, but not limited to, aluminum foil or copper foil.

In some embodiments, the cathode active material may comprise cathode active materials known in the art for sodium-ion batteries, and the sodium-supplementing agent may comprise sodium-supplementing agents known in the art for sodium-ion batteries.

In some embodiments, the cathode active material comprises one or more of sodium transition metal oxides, polyanionic compounds and Prussian blue analogs.

The present application is not limited to the aforementioned materials, and/or other materials known in the art as sodium-ion battery cathode active materials may be employed.

As an example, in sodium transition metal oxides, the transition metal may be one or more of Mn, Fe, Ni, Co, Cr, Cu, Ti, Zn, V, Zr, and Ce. The sodium transition metal oxide is, for example, $Na_xMO_2$, wherein M is one or more of Ti, V, Mn, Co, Ni, Fe, Cr and Cu, and $0<x\leq1$.

As an example, the polyanionic compounds may be a class of compounds comprising sodium ions, transition metal ions and tetrahedral $(YO_4)^{n-}$ anionic units. The transition metal may be one or more of Mn, Fe, Ni, Co, Cr, Cu, Ti, Zn, V, Zr and Ce; Y may be one or more of P, S and Si; and n represents the valence state of $(YO_4)^{n-}$.

The polyanionic compounds may also be a class of compounds comprising sodium ions, transition metal ions, tetrahedral $(YO_4)^{n-}$ anionic units and halogen anions. The transition metal may be one or more of Mn, Fe, Ni, Co, Cr, Cu, Ti, Zn, V, Zr and Ce; Y may be one or more of P, S and Si; n represents the valence state of $(YO_4)^{n-}$; and the halogen may be one or more of F, Cl and Br.

The polyanionic compounds may also be a class of compounds comprising sodium ions, tetrahedral $(YO_4)^{n-}$ anionic units, polyhedral units $(ZO_y)^{m+}$ and optional halogen anions. Y may be one or more of P, S and Si, and n represents the valence state of $(YO_4)^{n-}$; Z represents a transition metal, which may be one or more of Mn, Fe, Ni, Co, Cr, Cu, Ti, Zn, V, Zr and Ce, and m represents the valence state of $(ZO_y)^{m+}$; and the halogen may be one or more of F, Cl and Br.

The polyanionic compounds are, for example, one or more of $NaFePO_4$, $Na_3V_2(PO_4)_3$, $NaM'PO_4F$ (M' is one or more of V, Fe, Mn and Ni), and $Na_3(VO_y)_2(PO_4)_2F_{3-2y}$ $(0 \leq y \leq 1)$.

The Prussian blue analogs may be a class of compounds comprising sodium ions, transition metal ions and cyanide ions (CN-). The transition metal may be one or more of Mn, Fe, Ni, Co, Cr, Cu, Ti, Zn, V, Zr and Ce. The Prussian blue analogs may be, for example, $Na_aMe_bMe'_c(CN)_6$, wherein Me and Me' are each independently one or more of Ni, Cu, Fe, Mn, Co and Zn, $0 < a \leq 2$, $0 < b < 1$, and $0 < c < 1$.

In some embodiments, based on the total mass of the cathode film layer, a mass percentage of the cathode active material in the cathode film layer is 93-85%.

Exemplarily, a mass percentage of the cathode active material in the cathode film layer is 85%, 86%, 87%, 88%, 89%, 90%, 91%, 92%, 93%, or any value within the range formed by any two of the aforementioned values.

When a mass percentage of the cathode active material in the cathode film layer is within the above range, the cathode can have a relatively high sodium extraction and intercalation capacity, thereby enabling the sodium-ion battery to have a relatively high capacity.

In some embodiments, the sodium-supplementing agent comprises one or more of sodium carbonate, sodium oxalate, sodium nitrite and sodium azide.

In some embodiments, based on the total mass of the cathode film layer, a mass percentage of the sodium-supplementing agent in the cathode film layer is 4-8%;

Exemplarily, a mass percentage of the sodium-supplementing agent in the cathode film layer is 4%, 4.5%, 5%, 5.5%, 6%, 6.5%, 7%, 7.5%, 8%, or any value within the range formed by any two of the aforementioned values.

When a mass percentage of the sodium-supplementing agent is within the above range, it can supplement the sodium ions consumed due to the formation of the solid electrolyte interphase film (SEI film) on the anode surface, while facilitating the maintenance of the anode potential equal to or below a preset voltage $V_1$, so that the state of the anode is relatively stable, and it is less prone to reacting with the electrolyte, thereby greatly reducing gas generation, and improving the safety of the sodium-ion battery.

In some embodiments, the cathode film layer further comprises a cathode conductive agent and/or a cathode binder.

The cathode film layer may comprise a cathode conductive agent, or may comprise a cathode binder, or may comprise both a cathode conductive agent and a cathode binder.

Exemplarily, based on the total mass of the cathode film layer, the cathode film layer comprises a cathode conductive agent with a mass percentage of 1-3% and a cathode binder with a mass percentage of 2-6%.

In some embodiments, the cathode conductive agent comprises one or more of graphite, superconducting carbon, acetylene black, carbon black, carbon nanotubes, graphene, carbon nanofiber, metal powder, metal fiber and polyphenylene derivatives.

In some embodiments, the cathode binder comprises one or more of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylenehexafluoropropylene copolymer and fluorine-containing acrylate resin.

In some embodiments, an areal density of the single-sided cathode film layer is 10 $g/cm^2$ to 30 $g/cm^2$. When the areal density of the cathode film layer is within the above appropriate range, it is conducive to controlling the values of $C_{P2}/C_{N1}$ and $C_{P1}/C_{N2}$ within the scope of the present application, thereby enabling the sodium-ion battery of the present application to have a high energy density.

Exemplarily, an areal density of the single-sided cathode film layer is 10$g/cm^2$, 11$g/cm^2$, 12$g/cm^2$, 13$g/cm^2$, 14$g/cm^2$, 15$g/cm^2$, 16$g/cm^2$, 17$g/cm^2$, 18$g/cm^2$, 19$g/cm^2$, 20$g/cm^2$, 21$g/cm^2$, 22$g/cm^2$, 23$g/cm^2$, 24$g/cm^2$, 25$g/cm^2$, 25$g/cm^2$, 27 $g/cm^2$, 28$g/cm^2$, 29$g/cm^2$, 30$g/cm^2$, or any value within the range formed by any two of the aforementioned values.

The cathode may be prepared by conventional methods in the art. For example, the cathode film layer is usually made by formulating the cathode active material, sodium-supplementing agent, cathode conductive agent, cathode binder, and any other components into a cathode slurry, which is coated onto the cathode current collector, followed by drying and cold pressing. The solvent may be N-methyl-2-pyrrolidone (NMP), but is not limited to it.

The materials, composition and manufacturing method of the anode used in the sodium-ion battery of the present application may comprise any techniques known in the prior art.

The anode comprises an anode current collector and an anode film layer disposed on at least one surface of the anode current collector and comprising an anode active material. As an example, the anode current collector comprises two surfaces opposite to each other in the direction of its own thickness, and the anode film layer is disposed on either or both of the two opposite surfaces of the anode current collector.

In some embodiments, the anode current collector may comprise a metal foil, such as copper foil or aluminum foil.

In some examples, the anode film layer comprises an anode active material, and the anode active material may comprise anode active materials known in the art for sodium-ion batteries.

In some embodiments, the anode active material comprises hard carbon.

In some embodiments, based on the total mass of the anode film layer, a mass percentage of the anode active material in the anode film layer is 90-96%.

Exemplarily, a mass percentage of the anode active material in the anode film layer is 90%, 91%, 92%, 93%, 94%, 95%, 96%, or any value within the range formed by any two of the aforementioned values.

When the mass percentage of the anode active material in the anode film layer is within the above range, the anode can have a relatively high sodium intercalation capacity, thereby enabling the sodium-ion battery to have a relatively high battery capacity.

In some embodiments, the anode film layer further comprises an anode conductive agent and/or an anode binder.

The anode film layer may comprise an anode conductive agent, or may comprise an anode binder, or may comprise both an anode conductive agent and an anode binder.

Exemplarily, based on the total mass of the anode film layer, the anode film layer comprises an anode conductive agent with a mass percentage of 1-3% and an anode binder with a mass percentage of 2-6%.

In some embodiments, the anode conductive agent comprises one or more of graphite, superconducting carbon, acetylene black, carbon black, carbon nanotubes, graphene, carbon nanofiber, metal powder, metal fiber, and polyphenylene derivatives.

In some embodiments, the anode binder comprises one or more of styrene-butadiene rubber, polyacrylic acid, sodium polyacrylate, polyacrylamide, polyvinyl alcohol, sodium alginate, polymethacrylic acid, sodium carboxymethyl cellulose, and carboxymethyl chitosan.

In some embodiments, an areal density of the single-sided anode film layer is $3g/cm^2$-$10g/cm^2$. When the areal density of the anode film layer is within the above appropriate range, it is conducive to controlling $C_{P1}$, $C_{P2}$, $C_{N1}$ and $C_{N2}$ to satisfy $C_{P2} \geq C_{N1}$ and $C_{P1} \leq C_{N2}$, enabling the sodium-ion battery of the present application to have a high energy density.

Exemplarily, an areal density of the single-sided anode film layer is $3g/cm^2$, $4g/cm^2$, $5g/cm^2$, $6g/cm^2$, $7g/cm^2$, $8g/cm^2$, $9g/cm^2$, $10g/cm^2$, or any value within the range formed by any two of the aforementioned values.

In some embodiments, the anode can be prepared by the following method: disperse the above components for preparing the anode, such as the anode active material, anode conductive agent, anode binder and any other components, in a solvent (e.g., deionized water) to form an anode slurry; coat the anode slurry on the anode current collector, and perform processes such as drying and cold pressing, so that the anode is obtained.

It can be understood that the sodium-ion battery of the embodiments of the present application further comprises an electrolyte, the electrolyte functions to conduct active ions between the cathode and the anode. The electrolyte applicable to the sodium-ion battery of the present application may be any electrolyte known in the prior art.

In some embodiments, the electrolyte may comprise organic solvents, electrolyte salts and optional additives, and the types of organic solvents, electrolyte salts and additives are not subject to specific restrictions and may be selected according to requirements.

In some embodiments, electrolyte salts may comprise sodium salts. As an example, sodium salts may comprise one or more of $NaPF_6$, $NaClO_4$, $NaBCl_4$, $NaSO_3CF_3$ and $Na(CH_3)C_6H_4SO_3$.

In some examples, as an example, organic solvents include but are not limited to one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), dimethyl sulfone (MSM) and diethyl sulfone (ESE). The above organic solvents may be used singly or two or more can be used simultaneously. Optionally, two or more of the above organic solvents are used simultaneously.

In some examples, the additives may comprise anode film-forming additives, and cathode film-forming additives, and may also comprise additives capable of improving certain performances of the battery, such as additives for improving the overcharge performance of the battery, additives for improving the high-temperature or low-temperature performance of the battery, etc.

As an example, the additives include but are not limited to one or more of fluoroethylene carbonate (FEC), vinylene carbonate (VC), vinyl ethylene carbonate (VEC), ethylene sulfate (DTD), propylene sulfate, ethylene sulfite (ES), 1,3-propanesultone (PS), prop-1-ene-1,3-sultone (PST), cyclic quaternary ammonium sulfonate, succinic anhydride, succinonitrile (SN), adiponitrile (AND), tris(trimethylsilyl) phosphate (TMSP) and tris(trimethylsilyl) borate (TMSB).

The electrolyte may be prepared by conventional methods in the art. For example, the organic solvents, electrolyte salts and optional additives may be mixed uniformly to obtain the electrolyte. The order of adding each material is not particularly limited. For example, the electrolyte salts and optional additives are added into the organic solvents and mixed uniformly to obtain the electrolyte; alternatively, the electrolyte salts are first added into the organic solvents, then the optional additives are added into the organic solvents and mixed uniformly to obtain the electrolyte.

It can be understood that the sodium-ion battery of the embodiments of the present application may further comprise a separator, the separator is disposed between the cathode and the anode, and mainly functions to prevent short-circuit between the cathode and anode while allowing the passage of active ions. There are no specific restrictions on the types of separators in this application, and any known porous structure separator with good chemical stability and mechanical stability can be selected.

In some embodiments, the material of the separator may comprise one or more of glass fiber, non-woven fabric, polyethylene, polypropylene and polyvinylidene fluoride, but is not limited to this. Optionally, the material of the separator may comprise polyethylene and/or polypropylene. The separator may be a single-layer film or a multi-layer composite film. When the separator is a multi-layer composite film, the materials of each layer are the same or different. In some embodiments, a ceramic coating or a metal oxide coating may also be provided on the surface of the separator.

In a second aspect, the present application provides a preparation method of a sodium-ion battery for the above sodium-ion battery, comprising the following steps:

providing an anode, wherein the anode comprises an anode current collector and an anode film layer disposed on at least one surface of the anode current collector;

providing a cathode, wherein the cathode comprises a cathode current collector and a cathode film layer disposed on at least one surface of the cathode current collector, and the cathode film layer comprises a cathode active material and a sodium-supplementing agent;

assembling the cathode, a separator and the anode, followed by encapsulating and injecting an electrolyte to obtain the sodium-ion battery, wherein the sodium-ion battery satisfies: $(C_{P1} + C_{P2}) \leq (C_{N1} + C_{N2})$, $C_{P2} \geq C_{N1}$, and $C_{P1} \leq C_{N2}$; wherein,

$C_{P1}$ represents the sodium extraction capacity of the cathode active material per unit area of the cathode film layer, with a unit of $mAh/cm^2$;

$C_{P2}$ represents the sodium extraction capacity of the sodium-supplementing agent per unit area of the cathode film layer, with a unit of $mAh/cm^2$;

$C_{N1}$ represents the sodium intercalation capacity of the anode active material per unit area of the anode film layer when the anode voltage is equal to or above a preset voltage $V_1$, with a unit of $mAh/cm^2$;

$C_{N2}$ represents the sodium intercalation capacity of the anode active material per unit area of the anode film layer when the anode voltage is equal to or below a preset voltage $V_1$, with a unit of $mAh/cm^2$.

The above values satisfying $(C_{P1} + C_{P2}) \leq (C_{N1} + C_{N2})$, $C_{P2} \geq C_{N1}$, and $C_{P1} \leq C_{N2}$ may be achieved by methods known in the art, which are not limited herein. The means for controlling the values to satisfy $C_{P2} \geq C_{N1}$, and $C_{P1} \leq C_{N2}$ can refer to the first aspect of the present application, and will not be repeated herein. In some embodiments, after providing the cathode and the initial anode in accordance with the values satisfying $(C_{P1} + C_{P2}) \leq (C_{N1} + C_{N2})$, $C_{P2} \geq C_{N1}$, and $C_{P1} \leq C_{N2}$, the cathode and anode of unit area can be respectively taken and fabricated into coin-type cells, followed by testing to obtain the capacities of the cathode and anode, so as to confirm whether the values of $C_{P1}$, $C_{P2}$, $C_{N1}$ and $C_{N2}$ satisfy $(C_{P1} + C_{P2}) \leq (C_{N1} + C_{N2})$, $C_{P2} \geq C_{N1}$, and $C_{P1} \leq C_{N2}$. In some examples, $C_{P2}/C_{N1}$ is 1-1.9, and $C_{P1}/C_{N2}$ is 0.8-1.

In a third aspect, embodiments of the present application provide a battery module, comprising the sodium-ion battery of the present application.

The sodium-ion battery of the present application can be assembled into a battery module. The number of sodium-ion batteries comprised in the battery module may be one or more, and a person skilled in the art can select the specific number according to the application and capacity of the battery module.

In the battery module, a plurality of sodium-ion batteries may be arranged in sequence along the length direction of the battery pack. Certainly, they may also be arranged in any other manner. Further, the plurality of sodium-ion batteries may be secured by fasteners.

Optionally, the battery module may further comprise a housing with an accommodating space, and the plurality of sodium-ion batteries are accommodated in the accommodating space.

In a fourth aspect, embodiments of the present application provide a battery pack, comprising the sodium-ion battery and/or the battery module of the present application.

In some embodiments, the number of battery modules comprised in the battery pack can be one or more, and a person skilled in the art can select the specific number according to the application and capacity of the battery pack.

In a fifth aspect, embodiments of the present application provide an electric device, and the electric device comprises one or more of the sodium-ion batteries, battery modules or battery packs provided by the present application. The sodium-ion battery and battery may be used as the power source of the electric device. The electric device may comprise mobile devices (e.g., mobile phones, laptops, etc.), electric vehicles, etc., but is not limited to this. The electric device may select the sodium-ion battery, battery module or battery pack according to its usage requirements.

**Examples**

The following examples more specifically describe the content disclosed in the present application. These examples are merely for illustrative purposes, since various modifications and changes within the scope of the content disclosed in the present application will be apparent to those skilled in the art. Unless otherwise stated, all parts, percentages, and ratios reported in the following examples are based on mass, and all reagents used in the examples are commercially available or can be synthesized by conventional methods and can be used directly without further treatment, and all instruments used in the examples are commercially available.

The specific capacity of $NaFe(SO_4)_{1.5}$/CNT-5% used in the present application is 102 mAh/g, the specific capacity of $Na_3V_2O_2(PO_4)_2F$ is 120 mAh/g, the specific capacity of $Na_{2/3}Ni_{1/3}Mn_{7/12}Fe_{1/12}O_2$ is 120 mAh/g, the specific capacity of the sodium oxalate sodium-supplementing agent is 400 mAh/g, the specific capacity of the $NaNO_2$ sodium-supplementing agent is 388 mAh/g, and the sodium intercalation specific capacity of the hard carbon anode is 330 mAh/g, wherein the specific capacity of the anode equal to or above 0.6 V is 45 mAh/g, and the specific capacity of the anode from 0.6 V to 0 V is 285 mAh/g.

Test of the First-Cycle Charge-Discharge Specific Capacity of the Cathode Active Material:

Selecting the coated and rolled cathode, the proportion of the cathode active material in the cathode is x; punching it into discs, weighing the mass of the discs, and subtracting the mass of the foil to obtain the mass of the cathode film layer, denoted as m1; placing them in a CR2032-type coin cell in the order of the cathode, separator, metallic sodium sheet, spacer and spring sheet; adding an electrolyte with sodium perchlorate as the solute, the solvent being a mixture of ethylene carbonate and dimethyl carbonate at a volume ratio of 1:1, the additive being 5 wt% fluoroethylene carbonate, and the solute concentration being 1 mol/L; obtaining the sodium-ion coin cell after encapsulation. Performing constant-current charging at 0.1C to 4.5 V with 1C = 120 mAh/g to obtain the first-cycle sodium extraction capacity of the cathode active material, denoted as C1.

$$\text{First-cycle sodium extraction specific capacity of the cathode active material} = C1/(m1*x)$$

The specific capacity of the sodium-supplementing agent is calculated according to the formula: specific capacity of the sodium-supplementing agent = F*n/3.6M, wherein F is the Faraday constant 96485 with the unit of C/mol; M is the molar mass of the sodium-supplementing agent with the unit of g/mol; n is the number of $Na^+$ contained in the chemical formula of the sodium-supplementing agent, and the unit of the specific capacity of the sodium-supplementing agent is mAh/g.

Test of the First-Cycle Sodium Intercalation Specific Capacity of the Anode Active Material:

Selecting the coated and rolled anode, the proportion of the active material in the anode is y; punching it into discs, weighing the mass of the discs, and subtracting the mass of the foil to obtain the mass of the anode film layer, denoted as m2; placing them in a CR2032-type coin cell in the order of the anode, separator, metallic sodium sheet, spacer and spring sheet; adding an electrolyte with sodium hexafluorophosphate as the solute, the solvent being a mixture of ethylene carbonate and dimethyl carbonate at a volume ratio of 1:1, the additive being 5 wt% fluoroethylene carbonate, and the solute concentration being 1 mol/L; obtaining the sodium-ion coin cell after encapsulation. Performing constant-current charging at 0.1C with 1C = 120 mAh/g, during which the anode potential gradually decreases to $V_1$ (0.6 V), recording the capacity at this time as P1; continuing to decrease the potential from $V_1$ (0.6 V) to 0 V until the end of charging, recording the discharge capacity between 0.6 V and 0 V as P2; obtaining the first-cycle sodium intercalation capacity of the anode active material, denoted as D1 = P1 + P2.

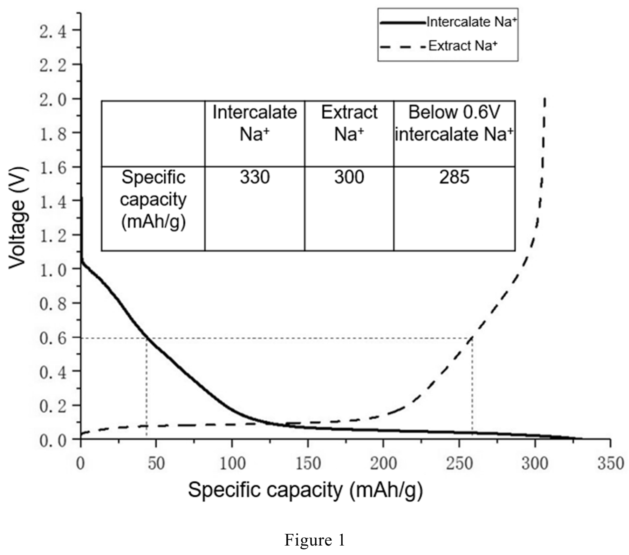

First-cycle sodium intercalation specific capacity of the anode = D1/(m2*y), wherein the first-cycle sodium intercalation specific capacity between 2.0 V and 0.6 V = P1/(m*2y), and the first-cycle sodium intercalation specific capacity between 0.6 V and 0 V = P2/(m2*y). Figure 1 shows the charge-discharge specific capacity curve of the anode film layer of the present application, with a sodium intercalation specific capacity of 330 mAh/g, wherein the sodium intercalation specific capacity of the anode from 0.6 V to 0 V is 285 mAh/g.

Example 1

## Preparation of the Cathode Sheet

90 g of NaFe(SO$_4$)$_{1.5}$/CNT-5% cathode active material is weighed; in a mass ratio of 90:4:2:4, 4 g of sodium oxalate as the sodium-supplementing agent, 2 g of Super-p as the conductive agent and 4 g of polyvinylidene fluoride as the binder are taken respectively. The above four materials are dispersed in N-methyl-2-pyrrolidone solvent, uniformly mixed and coated on a carbon-coated aluminum foil, then dried under vacuum conditions at 120 °C for 12 h to obtain the cathode sheet, and the areal density of the obtained sheet is 17 mg/cm$^2$.

## Preparation of the Anode Sheet

95 g of hard carbon anode active material is weighed; in a mass ratio of 95:1.5:2:1.5, 1.5 g of Super-p as the conductive agent, 2 g of styrene-butadiene rubber and 1.5 g of sodium carboxymethyl cellulose as the binder are weighed respectively. The above four materials are dispersed in pure water, uniformly mixed and coated on an aluminum foil, then dried under vacuum conditions at 120 °C for 12 h to obtain the anode sheet, and the areal density of the obtained sheet is 5.6 mg/cm$^2$.

## Die-cutting of the Sheets

Before die-cutting, the sheets are rolled to an appropriate compaction density. The cathode sheet is rolled to a thickness corresponding to a compaction density of 2 g/cm$^3$ based on its areal density, and the anode sheet is rolled to a thickness corresponding to a compaction density of 1.0 g/cm$^3$ based on its areal density. The cathode sheet is die-cut into square cathode sheets with a width of 43 mm, a length of 56 m, a tab length of 8 mm and a tab width of 6 mm; the anode sheet is die-cut into square anode sheets with a width of 45 mm, a length of 58 m, a tab length of 7 mm and a tab width of 6 mm.

## Preparation of the Sodium-Ion Battery

Tabs are welded onto the cathode sheet and the anode sheet using an electric welding machine, then they are stacked and secured in the order of the cathode sheet, separator and anode sheet, and jointly placed into a semi-sealed aluminum plastic film. After the completion of top and side sealing, it is transferred to vacuum conditions at 85 °C for drying for 48 h, with the separator being a polypropylene film. An electrolyte with sodium hexafluorophosphate as the solute, a mixture of ethylene carbonate and propylene carbonate at a volume ratio of 1:1 as the solvent and a solute concentration of 1 mol/L is added into the dried battery, and the sodium-ion battery is obtained after vacuum sealing.

Example 2

The preparation method of the anode sheet, die-cutting of the sheets and preparation of the sodium-ion battery in Example 2 are similar to those in Example 1, with the distinction lying in the preparation of the cathode sheet:

## Preparation of the Cathode Sheet

88 g of NaFe(SO$_4$)$_{1.5}$/CNT-5% cathode active material is weighed; in a mass ratio of 88:6:2:4, 6 g of sodium oxalate as the sodium-supplementing agent, 2 g of Super-p as the conductive agent and 4 g of polyvinylidene fluoride as the binder are taken respectively. The above four materials are dispersed in N-methyl-2-pyrrolidone solvent, uniformly mixed and coated on a carbon-coated aluminum foil, then dried under vacuum conditions at 120 °C for 12 h to obtain the cathode sheet, and the areal density of the obtained sheet is 17 mg/cm$^2$.

Example 3

The preparation method of the anode sheet, die-cutting of the sheets and preparation of the sodium-ion battery in Example 3 are similar to those in Example 1, with the distinction lying in the preparation of the cathode sheet:

## Preparation of the Cathode Sheet

89 g of Na$_3$V$_2$O$_2$(PO$_4$)$_2$F cathode active material is weighed; in a mass ratio of 89:5:2:4, 5 g of NaNO$_2$ as the sodium-supplementing agent, 2 g of Super-p as the conductive agent and 4 g of polyvinylidene fluoride as the binder are taken respectively. The above four materials are dispersed in N-methyl-2-pyrrolidone solvent, uniformly mixed and coated on a carbon-coated aluminum foil, then dried under vacuum conditions at 120 °C for 12 h to obtain the cathode sheet, and the areal density of the obtained sheet is 15 mg/cm$^2$.

Example 4

The preparation method of the anode sheet, die-cutting of the sheets and preparation of the sodium-ion battery in Example 4 are similar to those in Example 1, with the distinction lying in the preparation of the cathode sheet:

Preparation of the Cathode Sheet

89 g of $Na_{2/3}Ni_{1/3}Mn_{7/12}Fe_{1/12}O_2$ cathode active material is weighed; in a mass ratio of 89:5:2:4, 5 g of $NaNO_2$ as the sodium-supplementing agent, 2 g of Super-p as the conductive agent and 4 g of polyvinylidene fluoride as the binder are taken respectively. The above four materials are dispersed in N-methyl-2-pyrrolidone solvent, uniformly mixed and coated on a carbon-coated aluminum foil, then dried under vacuum conditions at 120 °C for 12 h to obtain the cathode sheet, and the areal density of the obtained sheet is 15 mg/cm$^2$.

Comparative Example 1

The preparation method of the anode sheet, die-cutting of the sheets and preparation of the sodium-ion battery in Comparative Example 1 are similar to those in Example 1, with the distinction lying in the preparation of the cathode sheet:

Preparation of the Cathode Sheet

92 g of $NaFe(SO_4)_{1.5}$/CNT-5% cathode active material is weighed; in a mass ratio of 92:2:2:4, 2 g of sodium oxalate as the sodium-supplementing agent, 2 g of Super-p as the conductive agent and 4 g of polyvinylidene fluoride as the binder are taken respectively. The above four materials are dispersed in N-methyl-2-pyrrolidone solvent, uniformly mixed and coated on a carbon-coated aluminum foil, then dried under vacuum conditions at 120 °C for 12 h to obtain the cathode sheet, and the areal density of the obtained sheet is 17 mg/cm$^2$.

Comparative Example 2

The preparation method of the anode sheet, die-cutting of the sheets and preparation of the sodium-ion battery in Comparative Example 2 are similar to those in Example 3, with the distinction lying in the preparation of the cathode sheet:

Preparation of the Cathode Sheet

92 g of $Na_3V_2O_2(PO_4)_2F$ cathode active material is weighed; in a mass ratio of 92:2:2:4, 2 g of $NaNO_2$ as the sodium-supplementing agent, 2 g of Super-p as the conductive agent and 4 g of polyvinylidene fluoride as the binder are taken respectively. The above four materials are dispersed in N-methyl-2-pyrrolidone solvent, uniformly mixed and coated on a carbon-coated aluminum foil, then dried under vacuum conditions at 120 °C for 12 h to obtain the cathode sheet, and the areal density of the obtained sheet is 15 mg/cm$^2$.

Comparative Example 3

The preparation method of the anode sheet, die-cutting of the sheets and preparation of the sodium-ion battery in Comparative Example 3 are similar to those in Example 4, with the distinction lying in the preparation of the cathode sheet:

Preparation of the Cathode Sheet

94 g of $Na_{2/3}Ni_{1/3}Mn_{7/12}Fe_{1/12}O_2$ cathode active material is weighed; in a mass ratio of 94:0:2:4, 0 g of $NaNO_2$ as the sodium-supplementing agent, 2 g of Super-p as the conductive agent and 4 g of polyvinylidene fluoride as the binder are taken respectively. The above four materials are dispersed in N-methyl-2-pyrrolidone solvent, uniformly mixed and coated on a carbon-coated aluminum foil, then dried under vacuum conditions at 120 °C for 12 h to obtain the cathode sheet, and the areal density of the obtained sheet is 17 mg/cm$^2$.

The areal density of the cathode film layer, proportion of the cathode active material, proportion of the sodium-supplementing agent, sodium extraction capacity of the cathode active material, sodium extraction capacity of the sodium-supplementing agent, areal density of the anode film layer, proportion of the anode active material, sodium intercalation capacity of the anode equal to or above 0.6 V and sodium intercalation capacity of the anode equal to or below 0.6 V in Examples 1-4 and Comparative Examples 1-3 are shown in Table 1 respectively.

In Table 1, $\rho_+$ denotes the areal density of the cathode film layer with the unit of $mg/cm^2$; $C_{P1}$ denotes the sodium extraction capacity of the cathode active material per unit area of the cathode film layer with the unit of $mAh/cm^2$; $C_{P2}$ denotes the sodium extraction capacity of the sodium-supplementing agent per unit area of the cathode film layer with the unit of $mAh/cm^2$; Above 0.6 V $C_{N1}$ denotes the sodium intercalation capacity of the anode active material per unit area of the anode film layer when the anode voltage is equal to or above 0.6 V, with the unit of $mAh/cm^2$; Below 0.6 V $C_{N2}$ denotes the sodium intercalation capacity of the anode active material per unit area of the anode film layer when the anode voltage is equal to or below 0.6 V, with the unit of $mAh/cm^2$; $\rho_-$ denotes the areal density of the anode film layer with the unit of $mg/cm^2$; $\omega_1$ denotes the mass percentage of the cathode active material in the cathode film layer; $\omega_2$ denotes the mass percentage of the sodium-supplementing agent in the cathode film layer; and $\omega_3$ denotes the mass percentage of the anode active material in the anode film layer.

Table 1. Preparation Parameters of Examples 1-4 and Comparative Examples 1-3

| | $\rho_-$ | $\omega_1$ (%) | $\omega_2$ (%) | $C_{P1}$ | $C_{P2}$ | $C_{P1}$ $+C_{P2}$ | $\rho_-$ | $\omega_3$ (%) | Above 0.6V $C_{N1}$ | Below 0.6 V $C_{N2}$ | $C_{N1}$ $+C_{N2}$ | $C_{P2}$ $/C_{N1}$ | $C_{P1}$ $/C_{N2}$ |
|---|---|---|---|---|---|---|---|---|---|---|---|---|---|
| Example 1 | 17 | 90 | 4 | 1.5606 | 0.272 | 1.8236 | 5.6 | 95 | 0.2394 | 1.7556 | 1.995 | 1.14 | 0.89 |
| Example 2 | 17 | 88 | 6 | 1.52592 | 0.408 | 1.93392 | 5.6 | 95 | 0.2394 | 1.7556 | 1.995 | 1.70 | 0.88 |
| Example 3 | 15 | 89 | 5 | 1.602 | 0.291 | 1.893 | 5.6 | 95 | 0.2394 | 1.7556 | 1.995 | 1.22 | 0.91 |
| Example 4 | 15 | 89 | 5 | 1.602 | 0.291 | 1.893 | 5.6 | 95 | 0.2394 | 1.7556 | 1.995 | 1.22 | 0.91 |
| Comparative Example 1 | 17 | 92 | 2 | 1.59528 | 0.136 | 1.73128 | 5.6 | 95 | 0.2394 | 1.7556 | 1.995 | 0.57 | 0.91 |
| Comparative Example 2 | 15 | 92 | 2 | 1.655 | 0.1164 | 1.761 | 5.6 | 95 | 0.2394 | 1.7556 | 1.995 | 0.49 | 0.95 |
| Comparative Example 3 | 17 | 94 | 0 | 1.9176 | 0 | 1.9176 | 5.6 | 95 | 0.2394 | 1.7556 | 1.995 | -- | 1.09 |

Performance Test

Performance Test of the Batteries

Three-Electrode Test Method:

A cathode sheet, an anode sheet and a metallic sodium electrode are taken, with metallic sodium serving as the reference electrode. The above materials are assembled into a three-electrode test device for coin cells, and the potential changes of the cathode and anode relative to the reference electrode during the charge and discharge process are tested.

The sodium-ion batteries in Examples 1-4 and Comparative Examples 1-3 are allowed to stand at 25 °C for 24 h to ensure the electrolyte fully wets the cathode, anode and separator. After standing, under a certain external pressure, the batteries are subjected to constant-current charging at 0.05C for 120 min at a current density of 1C = 120 mA/g, then constant-current charging at 0.1C for 180 min, followed by standing for another 2 h and then being charged to 4.55 V at 0.1C, and finally constant-current discharged to 2.0 V at 0.1C to complete the first-cycle formation. After the completion of formation, the gas bag of the pouch cell is cut off, and secondary sealing is performed. They are discharged to 2.5 V, 2.0 V, 1.5 V, 1.0 V and 0.5 V at 0.2C at 25 °C, and the gas generation is observed after standing for 24 h, as shown in Table 2.

Test Method for Gas Generation and Volume Change of Sodium-Ion Batteries:

Under a condition of 25 °C, a sufficiently large container is taken and filled with a certain amount of water. The water-filled container is placed on an electronic balance, a sodium-ion battery is secured and slowly immersed in the water, ensuring that the battery does not contact with the container. At this time, the reading of the balance changes compared with that before the battery is immersed; according to Archimedes' principle, the value of the change in the balance reading is the volume of the battery, which is recorded as V1. After the cell is cycled for a certain number of cycles, the above steps are repeated for testing, the volume is recorded as V2, and the volume change rate (volume expansion rate) is (V2-V1)/V1.

Table 2. Gas Generation of Examples 1-4 and Comparative Examples 1-3

| | Volume change rate after discharging to 2.5 V and standing for 24 h | Volume change rate after discharging to 2.0 V and standing for 24 h | Volume change rate after discharging to 1.5 V and standing for 24 h | Volume change rate after discharging to 1.0 V and standing for 24 h | Volume change rate after discharging to 0.5 V and standing for 24 h |
|---|---|---|---|---|---|
| Example 1 | 0.2% | 0.2% | 0.2% | 0.2% | 0.2% |
| Example 2 | 0.1% | 0.1% | 0.1% | 0.1% | 0.1% |
| Example 3 | 0.2% | 0.2% | 0.2% | 0.2% | 0.2% |
| Example 4 | 0.2% | 0.2% | 0.2% | 0.2% | 0.2% |
| Comparative Example 1 | 1.5% | 5.6% | 12% | 26% | 50% |
| Comparative Example 2 | 1.6% | 7% | 13% | 24% | 36% |
| Comparative Example 3 | 5% | 15% | 33% | 40% | 78% |

It can be seen from the gas generation of Examples 1-4 and Comparative Examples 1-3 that the gas generation of sodium-ion batteries at low voltage can be reduced by adjusting the addition amount of the sodium-supplementing agent and designing a reasonable ratio of sodium deintercalation and sodium intercalation between the cathode and the anode to satisfy $C_{P2} \geq C_{N1}$ and $C_{P1} \leq C_{N2}$, and the gas generation of the sodium-ion batteries in the examples of the present application is lower than 0.2%.

Table 3. Anode Potential Change relative to Metallic Sodium When Discharged to Different Operating Voltages in Three-Electrode Test

| | Discharge to 2.5 V | Discharge to 2.0 V | Discharge to 1.5 V | Discharge to 1.0 V | Discharge to 0.5 V |
|---|---|---|---|---|---|
| Example 1 | 0.15V | 0.21V | 0.3V | 0.38V | 0.49V |
| Example 2 | 0.15V | 0.19V | 0.24V | 0.29V | 0.38V |
| Comparative Example 1 | 0.62V | 0.71V | 0.83V | 0.95V | 1.2V |

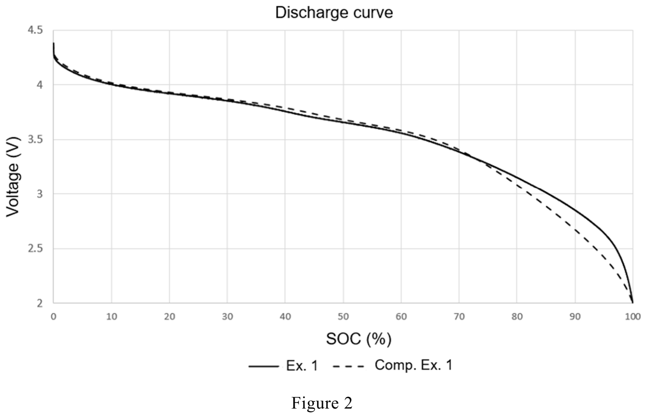

Table 3 shows the anode potential change relative to metallic sodium when discharged to different operating voltages in the three-electrode test. It can be seen from the anode potential change relative to metallic sodium of the sodium-ion batteries in Examples 1-2 and Comparative Example 1 when discharged to different operating voltages that, by adjusting the addition amount of the sodium-supplementing agent and designing a reasonable ratio of sodium deintercalation and sodium intercalation between the cathode and the anode to satisfy $C_{P2} \geq C_{N1}$ and $C_{P1} \leq C_{N2}$, the present application can keep the anode potential relative to metallic sodium consistently at the designed $V_1$ (0.6 V or below). During the subsequent operation of the sodium-ion battery, the discharge voltage of the sodium-ion battery is increased because the anode potential is maintained at a relatively low level at all times. Figure 2 shows the discharge curves of the sodium-ion batteries in Example 1 and Comparative Example 1. It can be seen that at the end of discharge and under the same state of charge, the voltage of Example 1 is significantly higher than that of Comparative Example 1. The state of charge in the present application is used to reflect the discharge capacity of the battery, with a value range of 0 to 100%, "0" indicates a fully charged state of the battery, and "100%" indicates a fully discharged state of the battery.

Although the present application has been disclosed above with reference to preferred examples, it is not intended to limit the claims. Any person skilled in the art may make various possible changes and modifications without departing from the concept of the present application. Therefore, the protection scope of the present application shall be defined by the scope of the claims of the present application.

## Claims

1.  A sodium-ion battery, wherein the sodium-ion battery comprises a cathode sheet and an anode sheet; wherein the cathode sheet comprises a cathode current collector and a cathode film layer disposed on at least one side of the cathode current collector, and the cathode film layer comprises a cathode active material and a sodium-supplementing agent; wherein the anode sheet comprises an anode current collector and an anode film layer disposed on at least one side of the anode current collector, and the anode film layer comprises an anode active material; wherein the sodium-ion battery satisfies: $C_{P2} \geq C_{N1}$, and $C_{P1} \leq C_{N2}$, wherein,

$C_{P1}$ represents a sodium extraction capacity of the cathode active material per unit area of the cathode film layer, with a unit of $mAh/cm^2$;

$C_{P2}$ represents a sodium extraction capacity of the sodium-supplementing agent per unit area of the cathode film layer, with a unit of $mAh/cm^2$;

$C_{N1}$ represents a sodium intercalation capacity of the anode active material per unit area of the anode film layer when an anode voltage is equal to or above a preset voltage $V_1$, with a unit of $mAh/cm^2$; and

$C_{N2}$ represents a sodium intercalation capacity of the anode active material per unit area of the anode film layer when an anode voltage is equal to or below a preset voltage $V_1$, with a unit of $mAh/cm^2$.

2. The sodium-ion battery according to claim 1, wherein the sodium-ion battery satisfies: $C_{P2}/C_{N1}$ is 1-1.9, and $C_{P1}/C_{N2}$ is 0.8-1.

3. The sodium-ion battery according to claim 1 or 2, wherein a relationship among $C_{P1}$, $C_{P2}$, $C_{N1}$, and $C_{N2}$ satisfies: $(C_{P1} + C_{P2}) \leq (C_{N1} + C_{N2})$.

4. The sodium-ion battery according to claim 1, wherein a value range of the preset voltage $V_1$ is 0.1V-0.7V.

5. The sodium-ion battery according to claim 1, wherein the sodium-ion battery satisfies at least one of the following characteristics:

the cathode active material comprises at least one of sodium transition metal oxides, polyanionic compounds, and Prussian blue analogs;

the sodium-supplementing agent comprises at least one of sodium carbonate, sodium oxalate, sodium nitrite, and sodium azide; and

the anode active material comprises hard carbon.

6. The sodium-ion battery according to any one of claim 1 or 2, wherein the sodium-ion battery satisfies at least one of the following characteristics:

based on a total mass of the cathode film layer, a mass percentage of the cathode active material is 85-93%;

based on a total mass of the cathode film layer, a mass percentage of the sodium-supplementing agent is 4-8%; and

based on a total mass of the anode film layer, a mass percentage of the anode active material is 90-96%.

7. The sodium-ion battery according to claim 6, wherein

the cathode film layer further comprises a cathode conductive agent and/or a cathode binder; and/or,

the anode film layer further comprises an anode conductive agent and/or an anode binder.

8. The sodium-ion battery according to claim 7, wherein the sodium-ion battery satisfies at least one of the following characteristics:

the cathode conductive agent comprises one or more of graphite, superconducting carbon, acetylene black, carbon black, carbon nanotubes, graphene, carbon nanofiber, metal powder, metal fiber, and polyphenylene derivatives;

the anode conductive agent comprises one or more of graphite, superconducting carbon, acetylene black, carbon black, carbon nanotubes, graphene, carbon nanofiber, metal powder, metal fiber, and polyphenylene derivatives;

the cathode binder comprises one or more of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylenehexafluoropropylene copolymer, and fluorine-containing acrylate resins; and

the anode binder comprises one or more of styrene-butadiene rubber, polyacrylic acid, sodium polyacrylate, polyacrylamide, polyvinyl alcohol, sodium alginate, polymethacrylic acid, sodium carboxymethyl cellulose, and carboxymethyl chitosan.

9. The sodium-ion battery according to claim 1 or 2, wherein the sodium-ion battery satisfies at least one of the following characteristics:

an areal density of a single-sided cathode film layer is 10g/cm$^2$-30g/cm$^2$; and
an areal density of a single-sided anode film layer is 3g/cm$^2$-10g/cm$^2$.

10. A battery module, wherein the battery module comprises the sodium-ion battery according to any one of claims 1-9.

11. A battery pack, wherein the battery pack comprises the sodium-ion battery according to any one of claims 1-9 and/or the battery module according to claim 10.

12. An electric device, comprising one or more of the following: the sodium-ion battery according to any one of claims 1-9, the battery module according to claim 10, and the battery pack according to claim 11.

Figure 1

Figure 2

**INTERNATIONAL SEARCH REPORT**

| International application No. |
| --- |
| **PCT/CN2023/143642** |

**A. CLASSIFICATION OF SUBJECT MATTER**

H01M10/054(2010.01)i; H01M10/058(2010.01)i; H01M10/42(2006.01)i; H01M4/13(2010.01)i; H01M4/133(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

DWPI; CNTXT; ENTXTC; VCN; CJFD: 钠??电池, 正极, 阴极, 活性, 补钠, sodium 1w battery, anode, positive electrode, sodium suppl+, active

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116646588 A (JIANGSU ZHONGNA ENERGY TECHNOLOGY CO., LTD.) 25 August 2023 (2023-08-25) <br> claims 1-12 | 1-12 |
| X | CN 113130896 A (ZHUHAI COSMX BATTERY CO., LTD.) 16 July 2021 (2021-07-16) <br> description, paragraphs 7-27 | 1-12 |
| X | CN 112768699 A (HUNAN LIFANG NEW ENERGY SCIENCE & TECHNOLOGY CO., LTD.) 07 May 2021 (2021-05-07) <br> description, paragraphs 7-23 | 1-12 |
| X | CN 114149319 A (NORTHWESTERN POLYTECHNIC UNIVERSITY) 08 March 2022 (2022-03-08) <br> description, paragraphs 9-30 | 1-12 |
| X | CN 116169290 A (HUZHOU CHAONA NEW ENERGY TECHNOLOGY CO., LTD.) 26 May 2023 (2023-05-26) <br> description, paragraphs 12-26 | 1-12 |

| ☑ Further documents are listed in the continuation of Box C. | ☑ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 March 2024** | **15 March 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/143642**

### C. DOCUMENTS CONSIDERED TO BE RELEVANT

| Category* | Citation of document, with indication, where appropriate, of the relevant passages | Relevant to claim No. |
|---|---|---|
| A | CN 116014073 A (SHANGHAI LINGFANG NEW ENERGY TECHNOLOGY CO., LTD.) 25 April 2023 (2023-04-25) entire document | 1-12 |
| A | CN 116314590 A (SHANGHAI YANGGUANG TECHNOLOGY CO., LTD.) 23 June 2023 (2023-06-23) entire document | 1-12 |
| A | CN 115763821 A (ZHUHAI KECHUANG ENERGY TECHNOLOGY CO., LTD.) 07 March 2023 (2023-03-07) entire document | 1-12 |
| A | JP 2022144122 A (ASAHI KASEI CORP. et al.) 03 October 2022 (2022-10-03) entire document | 1-12 |

Form PCT/ISA/210 (second sheet) (July 2022)

## INTERNATIONAL SEARCH REPORT
### Information on patent family members

International application No.

**PCT/CN2023/143642**

| Patent document cited in search report | | | Publication date (day/month/year) | Patent family member(s) | | | Publication date (day/month/year) |
|---|---|---|---|---|---|---|---|
| CN | 116646588 | A | 25 August 2023 | CN | 11646588 | B | 20 October 2023 |
| CN | 113130896 | A | 16 July 2021 | CN | 113130896 | B | 22 November 2022 |
| CN | 112768699 | A | 07 May 2021 | None | | | |
| CN | 114149319 | A | 08 March 2022 | None | | | |
| CN | 116169290 | A | 26 May 2023 | None | | | |
| CN | 116014073 | A | 25 April 2023 | None | | | |
| CN | 116314590 | A | 23 June 2023 | None | | | |
| CN | 115763821 | A | 07 March 2023 | None | | | |
| JP | 2022144122 | A | 03 October 2022 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310919702